# EUROPEAN PATENT APPLICATION

(11) **EP 1 480 390 A1**
(43) Date of publication of application: **24.11.2004**
(21) Application number: 03291221.4
(22) Date of filing: 23.05.2003
(51) Int. Cl.: H04L 12/413, H04L 12/28

(54) **Improved device and process for collision detection in a local area network**

(71) Applicant: Thomson Licensing S.A., 92100 Boulogne (FR)
(72) Inventor: Patrick, Will, 35700 Rennes (FR); Triole, Robert, 35440 Montreuil sur Ille (FR)
(74) Representative: Kerber, Thierry

(57) **Abstract**

The present invention concerns a device (1) and a process for increasing reliability of data communication of a half-duplex apparatus of a communication network.

The reliability device comprises means for providing (11) binary data (TD) of at least two periods, each of which is dedicated to data having either a first form consisting of an oscillatory signal, or a second form consisting of no signal, and the binary data containing successively both forms. The device also comprises means for comparing (12) the data transmitted and received (RD) by that apparatus, means for diagnosing (13) data collision when the transmitted and received data differ beyond admitted error and interference margin, and means for triggering (14) a reaction when data collision is detected.

## Description

The present invention relates to a device and a process for increasing reliability of data communication of a half-duplex apparatus belonging to a communication network, as well as to associated products and systems.

Digital or analog set top boxes (hereinafter "STBs") are commonly dialoging with some remote equipments through for instance PSTN (for "Public Switched Telephone Network") or cable return channel. This communication link is required when a set top box user wants for instance to buy a film by pay-TV procedure needing a connection with a remote server. Also, a connection towards a server may be required during the first STB installation in order to register a set top box hard disk drive that is paired with the STB hardware and a conditional access smart card.

Typically, communications between STBs and remote servers are done via existing networks, which are not located in the users' home areas.

Also, with the new STB market trends, an STB subscriber may own more than one STB in one local home area, additional STBs being often referred to as "second room" decoders.

Now, having several STBs needing subscription is normally expensive since the program operator provides subscription at the same rate for all STBs (indeed, he cannot guarantee that piracy is not done by using the second rooms STBs in another geographical area than the targeted one). However, when a communication is permanently established between the main STB and the secondary rooms decoders, then subscription price can be reduced since secondary decoders stop operations when no more data exchanges are performed (piracy is no more possible).

Then, communications between STBs located in the same small geographical area can be done using a wide range of customized or existing networks (main supplier, cable network, RF transmitter - for "Radio Frequency"...). In the case of RF cable STB, a local home network allowing communications between the STBs can be the existing RF cable distribution itself.

The kind of information to be exchanged locally may be for instance:
- anti-piracy data exchange;
- time information;
- decoder status (standby, normal mode, failure reason after self diagnostic...);
- and channel installation data.

Another aspect of the communications between STBs relies on the strains done to provide attractive price offers. Namely, such strains influence the chosen technical solutions and have an impact on the way the communications are executed.

A decoder can for instance use a unique carrier for data exchanges with only NRZ (for "Non-Return-to-Zero") coding and half-duplex protocols rather than two carriers (one for transmission, the other for reception), QAM modulation (for "Quadrature Amplitude Modulation", increasing the data baud rate), or full duplex protocol (allowing data reception while also transmitting). When using half duplex data exchanges, data collisions must be detected in order to ensure system reliability, preferably in a cost effective way.

Several solutions have been proposed to detect data collisions and to remedy them, by later retransmissions. Notably, the CSMA-CD protocol (for "Carrier Sense Multiple Access with Collision Detection") provides for multiple access with carrier listening, enabling stations to stop immediately any transmission when a collision between several messages is detected, and to start again transmission after a random delay.

Also, Japanese document JP-11-041214 is devoted to data transmission using an asynchronous half-duplex current loop, and discloses transmission / reception data collision detection means. Collision detection is done by comparing the transmitted and received data, a collision being stated in case of non-coincidence between both. Indeed, in a half-duplex apparatus, the transmitted data are notably received as such by the transmitting apparatus itself.

A more detailed operational mode for collision detection is disclosed in document JP2002-051064, which relates to transmission control for a two-wire transmission communication station that makes data transmission with an asynchronous start-stop system. According to the taught technique, a bid data consisting in one collision detection bit next to a start bit, is transmitted with lower priority on the transmission communication line. Then, a 1-bit collision detection means discriminates the occurrence of collision when the received data are different from the data transmitted by the same station, on the basis of the collision detection bit. If such an occurrence arrives, an instruction of transmission stop is immediately given.

The known achievements on collision detection and reaction thereto then provide a good set of efficient and possibly economical tools. However, comparing the transmitted and received signals, as disclosed in the Japanese documents above, is not always so straightforward to detect data collisions. In practice, the risks of interpreting erroneously results of the comparison are relatively high, especially in an STB network as mentioned above.

Indeed, further to usual error margins, some parasitic effects may come from communications between other STBs in the network, at frequencies similar to those used for the messages transmitted by the concerned STB. Then, some parasitic signals may arrive on that STB and disturb the reception, by introducing additional variations. Also, the reaction time of that STB (notably in case of progressive amplification of received messages) may induce delays in the correct detection of outside signals intended thereto. This could lead to failing significant received messages or arriving to the erroneous conclusion that these are only parasitic effects. As a result, the disclosed techniques may not be appropriate in a number of practical situations and cause misleading behaviors, by either missing received messages (not detected real collision) or by uselessly retransmitting messages (erroneously detected pseudo-collision).

The present invention concerns a device for increasing reliability of data communication of a half-duplex apparatus, enabling considerably improved data collision detection. That device can make possible to obtain considerably higher reliability results, and it may be implemented in some embodiments in an economical and rather simple way.

The invention concerns also a communication reliability process having the advantages above, as well as corresponding decoder, local network, computer program product and data signal.

It applies notably to the field of STBs network, whether via cable, satellite or PLC (for "Power Line Carrier"), but also to other kinds of communication equipments such as for example optical systems with light emitting and receiving elements.

To this end, the object of the invention is related to a device for increasing reliability of data communication of a half-duplex first apparatus belonging to a communication network of at least two apparatus. The first apparatus is intended to commonly receive data transmitted from other apparatus through the network on one hand, and data transmitted by the first apparatus itself on the other hand. That reliability device comprises:
- means for providing binary data having a form chosen among a first and a second form, intended to be transmitted by the first apparatus to allow collision detection;
- means for comparing the data transmitted by the first apparatus and data received by that first apparatus;
- means for diagnosing data collision when the transmitted and received data differ beyond admitted error and interference margin;
- and means for triggering a reaction when data collision is detected.

According to the invention, the means for providing binary data are designed to provide for each collision detection step at least two periods, each of which being dedicated to data of one of the first and second forms and the binary data in those periods containing successively both forms. Moreover, the providing means are intended to provide data so that the first form consists in an oscillatory signal and the second form consists in an absence of any signal.

That solution contrasts with the known techniques and with the implementations that a skilled person would have done in order to improve the collision detection quality. Indeed, instead of centering the strains on the discrimination means, in terms of precision and of additional recognition criteria, the device of the invention surprisingly makes use of a specific expression for the signals. For that, a binary approach (meaning the existence of two different forms and not necessarily the choice between "0" and "1"), an all-or-nothing variation and the exploitation of an oscillatory signal for the presence state, are used with time. This makes possible a clear and unambiguous detection, which can notably be explained by the binary recognition and the potential adaptation of the oscillatory signal to any chosen frequency, easily observable even in presence of parasitic signals.

Another advantage of the invention is its direct compatibility with digital information, though it could as well be applied to analogical signals. Indeed, the binary data can correspond to bits, the wanted form being obtained through an ASK (for "Amplitude Shift Keying") modulation.

In practice, the device of the invention may prove very efficient and reliable, since the distinction between significant data and parasitic effects is made considerably easier, thanks to the simple extraction of the binary terms.

Preferably, the providing means are such that the oscillatory form of the binary data is done at an adjustable frequency, which can be adapted in function of the set of apparatus involved in the communication network. This can be very useful when several local networks are connected through a wider area network. Indeed, the choice of different frequencies for respectively the various local networks may avoid parasitic signals coming from other local networks to be confused with meaningful information for the concerned local network.

According to a preferred embodiment, the communication reliability device of the invention comprises an automatic gain control system having a reaction time lower than the shortest of the periods produced by the providing means.

The short reaction time of the AGC (for "Automatic Gain Control") enables to take into account each data contribution done by a communication reliability device as defined in the invention. Namely, the fast AGC avoids missing a period with the first form (oscillatory signal) coming from outside, the received outside signal level being possibly low with respect to the level of a simultaneously transmitted and received local signal due to network transmission. The fast AGC enables any significant data to take shape in due time, namely on a period, that shape consisting either of an oscillatory signal at an expected frequency or of nothing.

Further, the communication reliability device can allow to implement a cost effective data collision detector using fast reacting AGC combined with basic data coding and reduced software protocol.

In another embodiment, the AGC is not so fast, but the communication reliability device comprises observing means, preferably arranged at the reception entry, able to recognize independently from the AGC the presence of outside significant signals on each period. In still other embodiments, the response in the apparatus is linear in time, so that no gain control is required.

Preferably, the providing means are intended to provide a first collision detection signal containing the binary data before each other data transmission and the comparing and diagnosing means are intended to be activated essentially during the transmission of that collision detection signal.

That embodiment avoids disturbing the transmission of the other data in case of collision, since the binary data sent beforehand enable to know if the following other data transmission may be done safely or not.

In a more specific advantageous embodiment, that first collision detection signal corresponds to one byte data. Moreover, two particular achievements deserve attention: one in which the first collision detection signal bears information on the identity of the transmitting apparatus, and one in which it is determined randomly.

Namely, according to the first achievement, the providing means are able to provide the first collision detection signal unambiguously identifying the first apparatus. In case of data collision due to transmission by both the first apparatus and at least another of the apparatus belonging to the communication network, that other apparatus transmitting another collision detection signal containing binary data having a form similar to the binary data of the first apparatus and unambiguously identifying the other apparatus, the diagnosing means are able to identify that other apparatus. Thereby, the collision detection means not only detect the collision but also enable to identify the apparatus involved in that collision.

According to the second achievement, the providing means are able to provide the first collision detection signal having random values. The advantage of that achievement relies on its simplicity. The reliability communication device advantageously benefits from both achievements.

Preferably, the binary data are not specifically concentrated in prior signals, but the whole signals have the form defined for the providing means, so that they can be used as such to detect collisions (and possibly collision origins) at any moment. Thus, when the first collision detection signal for transmitted data is already finished as the first collision detection signal of outside data arrives, the detection can take place anyway as defined above. Even without using a first collision detection signal, the detection technique is still applicable.

Advantageously, the means for providing binary data are such that the first data form consisting of an oscillatory signal is constituted by radio-frequencies.

Further, the triggering means are preferably designed to involve reemitting of the data transmitted by the first apparatus when data collision is detected, after a randomly determined delay.

The invention also relates to a decoder, characterized in that it comprises a communication reliability device complying with any embodiment of the invention.

The invention further concerns a local network intended to be connected to a wide area network, characterized in that it comprises a set of such decoders. Preferably, one of those decoders is a main decoder and the others are secondary decoders, the latter being intended to communicate periodically with the main decoder and to stop working when the main decoder does not work.

This enables operators to put in practice a considerably improved safety mechanism when providing subscriptions with tapering rates for decoders in a same place, for example in the same home. Indeed, a main risk for such tapering rates is that the subscriber sub-rents one of its decoders to persons who do not live in that home, which amounts to getting the proposed service away from its purpose. Such a hacking can be fought by executing a periodic communication between the decoders as defined above, the communication reliability device of the invention enabling to manage data collisions. Then, when the main decoder is absent or is not connected to the network, the secondary decoders cannot work. The present system is then quite dissuasive towards sub-renting decoders.

Another subject of the invention is a process for increasing reliability of data communication of a half-duplex first apparatus belonging to a communication network of at least two apparatus. The first apparatus is intended to commonly receive data transmitted from other apparatus through the network on one hand, and data transmitted by the first apparatus itself on the other hand. That reliability process comprising the following steps:
- transmitting with the first apparatus, binary data having a form chosen among a first and a second form, able to allow collision detection,
- comparing the data transmitted by the first apparatus and data received by the first apparatus,
- diagnosing data collision when the transmitted and received data differ beyond admitted error and interference margin,
- and triggering a reaction when data collision is detected.

According to the invention, providing said binary data is done for each collision detection step by providing at least two periods. Each of those periods is dedicated to data of one of the first and second forms and the binary data in those periods contain successively both forms, the first form consisting in an oscillatory signal and the second form consisting in an absence of any signal.

That reliability communication process is preferably executed by means of a reliability communication device in compliance with any embodiment of the invention.

The invention also concerns a computer program product comprising program code instructions for the execution of the process according to the invention when that program is executed on a computer. By "computer program product", it is meant a support for computer program, which can consist not only in a storing space containing that program, such as a diskette or a cassette, but also in a signal, such as an electrical or optical signal.

The invention also relates to a data signal including an automatic control signal at the beginning of that data signal. The control signal comprises binary data having a form chosen among a first and a second form distributed over at least two successive sections, each of those sections being dedicated to data of one of the first and second forms and the binary data in those periods containing successively both forms.

According to the invention, the automatic control data are intended for collision detection, and further the first form consists in an oscillatory signal and the second form consists in an absence of any signal. That data signal is preferably produced by any embodiment of the reliability communication device of the invention.

The invention will be better understood and illustrated by means of the following not limitative examples of embodiments and execution, with reference to the appended figures on which:
- Figure 1 shows a network connecting a plurality of apparatus, at least one of which comprises a communication reliability device compliant with the invention;
- Figure 2 is a block-diagram of a communication reliability device as used in the network of Figure 1;
- Figure 3 illustrates a special application in which the network of Figure 1 is a cable network comprising several local home networks connecting STBs, and the communication reliability device of Figure 2 is implemented in several of those STBs;
- Figure 4 shows a particular embodiment of the communication reliability device of Figure 2, well suited to the application of Figure 3;
- Figure 5a represents an example of a continuous square wave signal produced in the communication reliability device of Figure 4;
- Figure 5b represents a resulting RF carrier modulation signal corresponding to the square wave signal of Figure 5a;
- Figure 6 illustrates successive communication steps between two STBs provided with a communication reliability device similar to the one of Figure 4, in the network of Figure 3;
- Figure 7 represents in a binary form, first collision detection signals intended to be produced by the two STBs of Figure 6 and by a further third STB in the network of Figure 6, and the result of a collision between the two first STBs;
- and Figure 8 completes Figure 6 by showing later communication steps in case of collision between data coming from both STBs.

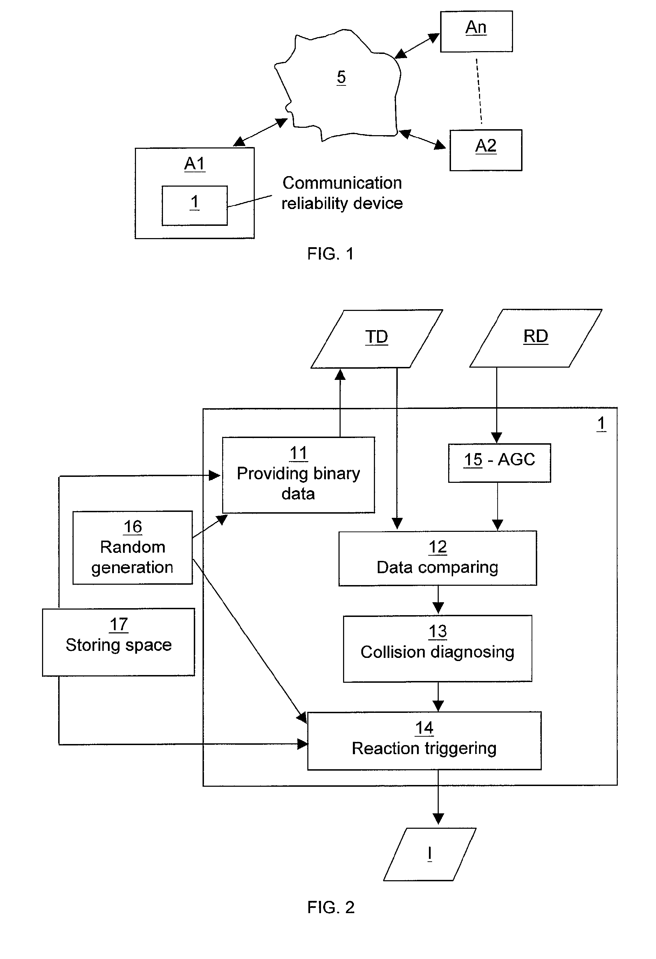

A communication network 5 (Figure 1) connects various apparatus A1, A2... An, at least one of which is a half-duplex apparatus A1 provided with a communication reliability device 1 able to detect data collisions and to react in case of such collisions.

The communication reliability device 1 (Figure 2) is intended to obtain data TD and RD respectively transmitted and received by the apparatus A1. It comprises a unit 11 for providing specific data, which can be used by the apparatus A1 as some of the transmitted data TD for sending through the network 5 to another of the apparatus Ai (i= 2... n). Those specific data, which are used for collision detection, form a collision detection signal. They can be obtained from a random generation unit 16. They can also be extracted from a storing space 17, in which a collision detection signal associated with the apparatus A1 is stored.

The device 1 also comprises:
- a unit 12 for comparing the data TD transmitted by the apparatus A1 and the data RD received thereby, the latter being previously put forwards by means of an automatic gain control system 15;
- a unit 13 for diagnosing data collision when the transmitted data TD and treated received data RD differ beyond admitted error and interference margin;
- and a unit 14 for triggering a reaction when data collision is detected, through the sending of instructions I; those instructions comprise re-emitting the sent data after a given delay, which can be produced randomly by the random generation unit 16.

The instructions I produced by the triggering unit 14 may also comprise identifying the other apparatus Ai having caused the collision, insofar as the involved received data RD include a collision detection signal associated with the apparatus Ai similar to the one mentioned above for the apparatus A1. For such an embodiment, a database registered in the storing space 17 is devoted to the various collision detection signals respectively associated with the concerned apparatus Ai connected to the network 5. This is particularly useful when at least three apparatus are provided with functionalities corresponding to the communication reliability device 1 and when multiple collisions are possible due to simultaneous sending of not necessarily reciprocal messages from different apparatus.

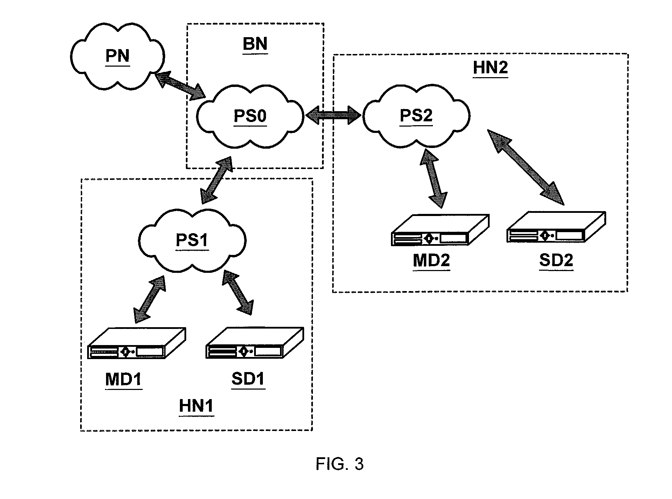

In a particular interesting example (Figure 3), the network 5 consists in an RF cable network CN, which includes several home networks, HN1 and HN2 in the illustrated example, connected through a building RF cable distribution network BN. The latter, which includes a 1 to N ways power splitter PS0, communicates with an RF channel provider network PN. Each of the home networks HNi (here i = 1, 2) comprises itself a power splitter PSi, respectively, and is connecting a main STB MDi and at least one secondary STB SDi, respectively (generic notations: MD and SD). For designation brevity, the STBs MDi and SDi are considered as being parts of the home networks HNi. Each of those STBs is provided with the functionalities corresponding to the communication reliability device 1.

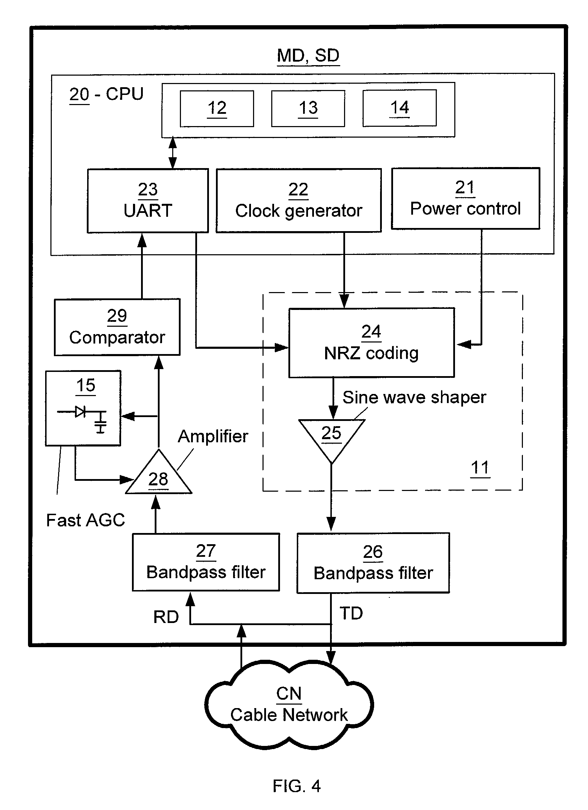

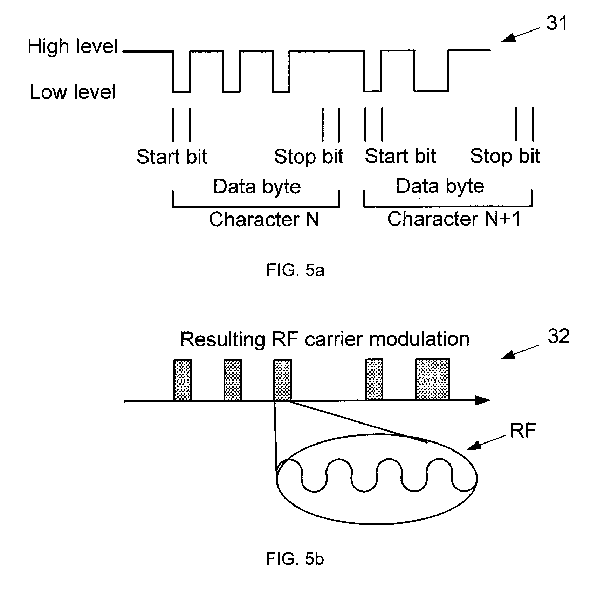

A representative example of a half-duplex STB communication receiver / transmitter architecture is given below, with reference to Figures 4, 5a and 5b.

### Data transmitter

A CPU 20 (for "Central Processing Unit") of the STB MD or SD comprises a power control 21, a clock generator 22 and a UART 23 (for "Universal Asynchronous Receiver-Transmitter") intended to transmit and receive digital data. The CPU 20 also comprises the comparing 12, diagnosing 13 and triggering 14 units of the device 1, communicating with the UART 23.

The STB MD or SD also contains an NRZ coding unit 24 supplied with the power control 21, able to deal with the digital data transmitted by the UART 23 and to provide a continuous square wave signal 31 based on the clock generator 22 (Figure 5a). This square wave 31 is provided to a sine wave shaper 25, which acts on the signal 31 only when bit data to transmit is low (namely, when a "0" is transmitted). If data bit is high (namely, when a "1" is transmitted), no clock is provided towards next processing stage. Thus, an RF carrier modulation 32 is produced at a wanted frequency (Figure 5b). As can be understood from their functions, the NRZ coding unit 24 and the sine wave shaper 25 are parts of the providing unit 11.

A bandpass filter 26 ensures isolation between the STB MD or SD and the cable network CN, except at the wanted RF carrier frequency.

### DATA receiver

The RF data receiver is composed of a bandpass filter 27 (ensuring that only data at the wanted RF carrier are amplified), a wide range amplifier 28 with gain control (from 0 to 30 dB for instance) by means of the AGC 15, a voltage peak detector with filtering cell (not represented) and finally a comparator 29 allowing data formatting for the CPU receiver UART 23.

### Half duplex data transmission

Since the transmitter and receiver have a common connection point and since they operate at exactly the same RF carrier frequency, when data are transmitted towards a remote STB, the local receiver also receives those data. Further, data transmission by the STB and reception of the same data does not involve power loss between the STB transmitter and the same STB receiver.

Now, using NRZ data modulation combined with the RF receiver AGC 15 reacting at least as fast as a data bit duration (hence "fast AGC") enables to detect collisions.

### Data collision detection

In a multi-STB network, each STB may start data transmission without knowing if another one also starts at the same moment. If several STBs start at the same time, data collisions occur and those data are lost. The presently used techniques comprise:
- NRZ data coding;
- byte data transmission with start / stop bits (cf. Figure 5a);
- gain control reacting at a bit duration level;
- and adapted software protocol.

This enables to ensure that no data are lost and that collisions do not occur without being detected.

With the fast AGC 15 as defined being implemented, reacting at a data bit level, local and remote STBs RF powers are detected and provide different data in the receiver stage. Thus, transmitted data Tx and received data RX are different in the same STB, so that data collision can be detected. The fast reaction of the AGC 15 enables to avoid non-detection, which would be due to the network attenuation of the remote STB data level (assuming same transmission levels for the local and remote STBs) and to the non-immediate decreasing of the AGC amplifier gain because of the filtering reaction time.

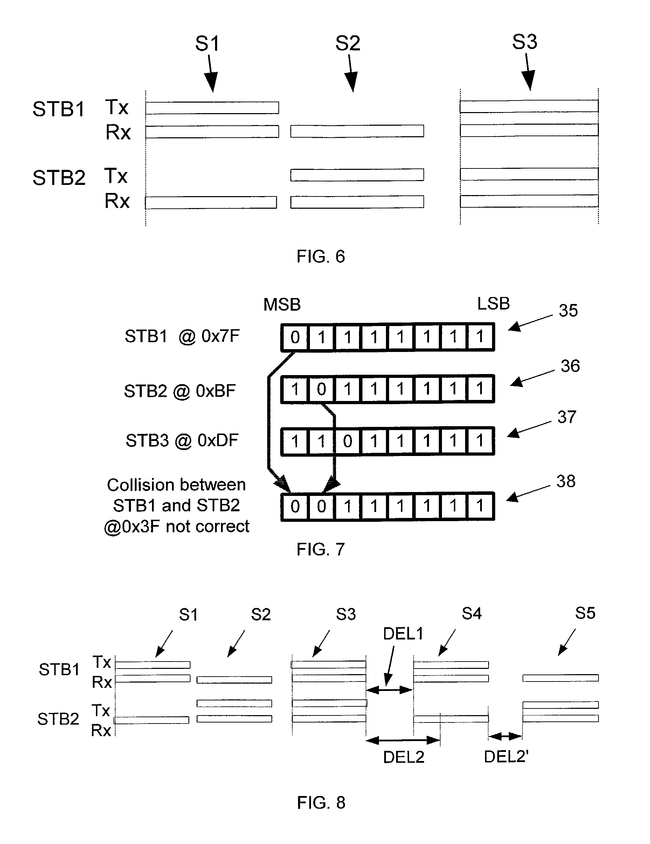

For example (Figure 6), at a first step S1, a first half-duplex STB, noted STB1, transmits data to a second STB, noted STB2. The transmitted data are then received by both STBs. At a second step S2, STB2 transmits at its turn data to STB1, which data are received by both STBs. In a third step S3, however, both STBs STB1 and STB2 start communications at the same time. Then, both apparatus simultaneously transmit and receive data, which leads to collision. Thanks to the present implementation, that collision is detected and dealt with by the communication reliability devices 1 of the STBs, as explained above and detailed below.

A software protocol is defined, in which either a dummy byte or a byte with specific content is systematically transmitted just before each set of data, this byte forming a collision detection signal. After transmission of that byte, the receiver buffer content is checked for collision.

The SW dummy byte may be a random number generated by each STB (by the random generation unit 16), each time it wants to start a communication. Otherwise, the byte with specific content may be an address byte defining the targeted STB that should use the received data (that byte being registered in the database of the storing space 17).

An example of address byte coding is given below (see Figure 7, MSB for "Most Significant Bit" and LSB for "Least Significant Bit"), for three half-duplex STBs STB1, STB2 and STB3 communicating through the cable network CN (the two first ones being for example those mentioned previously). Those STBs are respectively associated with three address bytes 35, 36 and 37, having respectively the first, second and third bits equal to 0, and all other bits equal to 1. Due to the use of NRZ coding and sine shaping as described above, an RF carrier is present only for the zeros (data low level). In case of a data collision between the address bytes 35 and 36 transmitted by the first and second STBs STB1 and STB2, a resulting address byte 38 received by STB1 and STB2 has its two first bits equal to 0 (present RF carrier) and all others equal to 1 (no signal). Data collision is then quite simply established by observing that the received byte has more than one bit low.

According to a possible SW implementation for reacting to collision detection and for retrieving the wished data, for example on the ground of the collision detected in step S3 above (Figure 8):
- in each STB involved in the collision (STB1 and STB2 in the example), a random number is generated by means of the random generation unit 16;
- communication is retrieved by means of the triggering unit 14 when a random time, based on the previous random number, is elapsed; here, the produced random delays are DEL1 and DEL2 for respectively STB1 and STB2, the delay DEL1 being smaller than DEL2; so, STB1 first starts again transmitting the information in step S4;
- and the STB where data are received while its random time is not yet elapsed waits for the communication to complete before trying to send its own message; here, the triggering unit 14 in STB2 waits for the end of reception of the data sent by STB1 in step S4, and then starts again communication after a given delay DEL2' in step S5.

According to variants and other embodiments:
- the providing unit 11 is able to apply other kinds of methods instead of (or further to) the NRZ coding, such as notably S-NRZ (for "Scrambled NRZ"), NRZI (for "NRZ change on ones"), Biphase Mark, MFM (for "Modified Frequency Modulation") and/or Square Miller; the important point is the obtained binary representation;
- the communications are done in other ranges than RF frequencies;
- the network is a satellite-cable, satellite or PLC network;
- several half-duplex apparatus without hierarchical links (namely, not master and slaves) communicate;
- the AGC is not fast, as defined above, but a further unit is able to distinguish the presence of oscillatory signals or the absence of signals at reception.

## Claims

1. Device for increasing reliability (1) of data communication of a half-duplex first apparatus (A1) belonging to a communication network (5) of at least two apparatus (A1-An), said first apparatus being intended to commonly receive data transmitted from other apparatus through the network (5) on one hand, and data transmitted by said first apparatus itself on the other hand, said reliability device (1) comprising:
- means for providing (11) binary data (TD, 32) having a form chosen among a first and a second form, intended to be transmitted by said first apparatus to allow collision detection,
- means for comparing (12) said data (TD, 32) transmitted by said first apparatus and data (RD) received by said first apparatus,
- means for diagnosing (13) data collision when said transmitted (TD, 32) and received (RD) data differ beyond admitted error and interference margin,
- and means for triggering (14) a reaction when data collision is detected,
**characterized in that** said means for providing (11) binary data are designed to provide for each collision detection step at least two periods, each of said periods being dedicated to data of one of said first and second forms and said binary data in said periods containing successively both forms, and **in that** said providing means (11) are intended to provide data so that said first form consists in an oscillatory signal and said second form consists in an absence of any signal.

2. Communication reliability device (1) according to claim 1, **characterized in that** it comprises an automatic gain control system (15) having a reaction time lower than the shortest of said periods.

3. Communication reliability device (1) according to claim 1 or 2, **characterized in that** said providing means (11) are intended to provide a first collision detection signal (35-37) containing said binary data before each other data transmission and said comparing (12) and diagnosing (13) means are intended to be activated essentially during the transmission of said collision detection signal.

4. Communication reliability device (1) according to claim 3, **characterized in that** said first collision detection signal (35-37) corresponds to one byte data.

5. Communication reliability device according to claim 3 or 4, **characterized in that** said providing means (11) are able to provide said first collision detection signal (35) unambiguously identifying said first apparatus (STB1), and **in that**, in case of data collision due to transmission by both the first apparatus (STB1) and at least another of the apparatus (STB2) belonging to said communication network, said other apparatus (STB2) transmitting another collision detection signal (36) containing binary data having a form similar to the binary data of the first apparatus (STB1) and unambiguously identifying said other apparatus (STB2), said diagnosing means (13) are able to identify said other apparatus.

6. Communication reliability device (1) according to any of claims 3 or 5, **characterized in that** said providing means (11) are able to provide said first collision detection signal having random values.

7. Communication reliability device (1) according to any of the preceding claims, **characterized in that** said means for providing (11) binary data are such that said first data form consisting of an oscillatory signal is constituted by radio-frequencies.

8. Communication reliability device (1) according to any of the preceding claims, **characterized in that** said triggering means (14) are designed to involve reemitting of the data transmitted by said first apparatus (A1, STB1) when data collision is detected, after a randomly determined delay (DEL1).

9. Decoder (MDi, SDi, STBi), **characterized in that** it comprises a communication reliability device (1) complying with any of the claims 1 to 8.

10. Local network (HN1, HN2) intended to be connected to a wide area network (PN, BN), **characterized in that** it comprises a set of decoders (MDi, SDi) complying with claim 9.

11. Local network (HN1, HN2) according to claim 10, in which one of said decoders (MDi) is a main decoder and the others of said decoders (SDi) are secondary decoders, the secondary decoders (SDi) being intended to communicate periodically with the main decoder (MDi) and to stop working when the main decoder (MDi) does not work.

12. Process for increasing reliability of data communication of a half-duplex first apparatus (A1) belonging to a communication network (5) of at least two apparatus (A1-An), said first apparatus being intended to commonly receive data transmitted from other apparatus through the network (5) on one hand, and data transmitted by said first apparatus itself on the other hand, said reliability process comprising the following steps:
- transmitting with said first apparatus, binary data (TD, 32) having a form chosen among a first and a second form, able to allow collision detection,
- comparing said data transmitted (TD, 32) by the first apparatus and data received (RD) by the first apparatus,
- diagnosing data collision when said transmitted (TD, 32) and received (RD) data differ beyond admitted error and interference margin,
- and triggering a reaction when data collision is detected,
**characterized in that** providing said binary data (TD, 32) is done for each collision detection step by providing at least two periods, each of said periods being dedicated to data of one of said first and second forms and said binary data in said periods containing successively both forms, said first form consisting in an oscillatory signal and said second form consisting in an absence of any signal,
said reliability communication process being preferably executed by means of a reliability communication device (1) in compliance with any of claims 1 to 8.

13. Computer program product comprising program code instructions for the execution of the process according to claim 12 when said program is executed on a computer.

14. Data signal including an automatic control signal (32, 35-37) at the beginning of said data signal, said control signal comprising binary data having a form chosen among a first and a second form distributed over at least two successive sections, each of said sections being dedicated to data of one of said first and second forms and said binary data in said periods containing successively both forms,
**characterized in that** said automatic control data are intended for collision detection and **in that** said first form consists in an oscillatory signal and said second form consists in an absence of any signal,
said data signal being preferably produced by a reliability communication device (1) in compliance with claims 1 to 8.
